# FASCICULE DE BREVET EUROPEEN

(11) **EP 2 388 492 B1**
(45) Date de publication et mention de la délivrance du brevet: **20.03.2013**
(21) Numéro de dépôt: 11166547.7
(22) Date de dépôt: 18.05.2011
(51) Int. Cl.: F16F 1/12, G05G 1/30, G05G 3/00, G05G 5/03, B60K 16/00

(54) **Dispositif d'assistance à la pédale de débrayage d'un véhicule automobile**
Kupplungspedal-Hilfsvorrichtung eines Kraftfahrzeugs
Device to assist the clutch pedal of an automobile

(30) Priorité: 19.05.2010 FR 1053890
(43) Date de publication de la demande: 23.11.2011
(73) Titulaire: Peugeot Citroën Automobiles SA, 78140 Vélizy-Villacoublay (FR)
(72) Inventeur: Voisin, Jean-Philippe, 90350, EVETTE-SALBERT (FR); Juillard, Cedric, 25600, SOCHAUX (FR)

(56) Documents cités:
- DE-C- 381 316
- DE-U- 1 678 046
- DE-U- 1 764 461
- FR-A1- 2 928 750
- US-A1- 2005 167 235

## Description

La présente invention concerne un système d'actionnement d'un embrayage de véhicule, qui comprend une pédale et un dispositif d'assistance de cette pédale.

Dans les véhicules automobiles actuels, le pédalier est équipé, de manière classique, d'un dispositif d'assistance sur la pédale de débrayage, qui comprend au moins un ressort d'assistance et deux coupelles à l'une et à l'autre des deux extrémités du ressort.

A titre d'exemple, le document FR 2 928 750 décrit un dispositif d'actionnement d'un embrayage à disques de véhicule automobile, qui comprend une pédale et un ressort dont la force s'exerce entre cette pédale et la carrosserie du véhicule. La disposition du ressort est telle que, lorsque la pédale est en position de repos, le ressort exerce une force de rappel qui retient cette pédale à cette position. Une extrémité du ressort est articulée sur la pédale d'embrayage, entre la plaque d'appui de cette dernière et son axe de pivotement, tandis que son autre extrémité est articulée sur un support fixe placé en arrière de la pédale d'embrayage. Les deux extrémités du ressort sont clippées respectivement sur la pédale d'embrayage et sur le support fixe.

Le but de la présente invention est de fournir un système d'actionnement d'un embrayage de véhicule, qui comprend une pédale et un dispositif d'assistance de cette pédale, qui soit de plus grande fiabilité que les systèmes connus de l'art antérieur, en particulier en supprimant les risques de déclippage du ressort d'assistance sous l'effet d'un appui involontaire du pied de l'utilisateur du véhicule.

Un autre but de la présente invention est de fournir un tel système d'actionnement d'un embrayage de véhicule, qui soit compatible avec tous les pédaliers de véhicules, qui soit de conception et de réalisation simple, qui soit stable, robuste et économique.

Pour parvenir à ces buts, la présente invention a pour objet un système d'actionnement d'un embrayage de véhicule, qui comprend une pédale et un dispositif d'assistance de cette pédale conformément à l'objet de la revendication 1.

Selon un mode préféré de réalisation de l'invention, la gorge de clippage de la coupelle supérieure est d'axe longitudinal incliné d'un angle voisin de 90° par rapport à l'axe longitudinal du dispositif.

Selon ce mode préféré de réalisation de l'invention également, la gorge de clippage est composée d'un orifice circulaire sensiblement central prolongé par un tronçon rectiligne débouchant sur la face de la coupelle supérieure opposée à l'espace dans lequel évolue le pied de l'utilisateur du véhicule en position de débrayage.

De préférence, la face de la coupelle supérieure située du côté de l'espace dans lequel évolue le pied de l'utilisateur du véhicule en position de débrayage est une surface courbe convexe sensiblement centrée sur le pion fixe, de manière à permettre un renforcement du clippage en cas d'appui involontaire du pied de l'utilisateur sur ladite coupelle supérieure.

En position « débrayée », l'axe longitudinal de la gorge de clippage est sensiblement vertical lorsque la coupelle supérieure est en position clippée.

En variante, la gorge de clippage de la coupelle supérieure peut s'étendre selon l'axe longitudinal du ressort d'assistance et il peut être prévu une languette de ladite coupelle qui vient bloquer le pion fixe à l'intérieur de la gorge de clippage, de telle sorte qu'un appui involontaire sur la coupelle supérieure par le pied de l'utilisateur ne vient pas sortir le pion de la gorge de clippage et, par conséquent, supprime tout risque de déclippage du dispositif d'assistance.

Pour des raisons qui tiennent à la fabrication par moulage des coupelles, la coupelle inférieure, reliée à la pédale de débrayage, présente une gorge pour le clippage du dispositif sur un pion solidaire de la pédale, et cette gorge s'étend selon la direction longitudinale du ressort d'assistance.

De manière connue en soi, le ressort d'assistance se compose d'une tige de guidage et d'un ressort hélicoïdal qui entoure la tige de guidage.

D'autres buts, avantages et caractéristiques de l'invention apparaîtront dans la description qui suit de modes de réalisation préférés, non limitatifs de l'objet et de la portée de la présente demande de brevet, accompagnée de dessins dans lesquels :
- la figure 1 illustre, de manière schématique, une situation de déclippage du dispositif d'assistance d'une pédale de débrayage connu de l'art antérieur sous l'effet d'un appui involontaire du pied de l'utilisateur du véhicule sur ledit dispositif,
- la figure 2 est une vue agrandie du dispositif d'assistance de la figure 1,
- la figure 3 est une vue en perspective, schématique, montrant notamment la coupelle supérieure du dispositif d'assistance à la pédale de débrayage, selon la présente invention,
- la figure 4 est une vue latérale de l'élément de la figure 3,
- la figure 5 illustre, de manière schématique, le principe de la présente invention qui permet de s'opposer à un déclippage du dispositif d'assistance de la pédale de débrayage sous l'effet d'un appui involontaire d'un pied de l'utilisateur du véhicule,
- la figure 6 est une vue agrandie du dispositif d'assistance de la figure 5, et
- la figure 7 est une vue en perspective, schématique, d'une variante de réalisation de la coupelle supérieure du dispositif d'assistance de la pédale de débrayage, selon la présente invention.

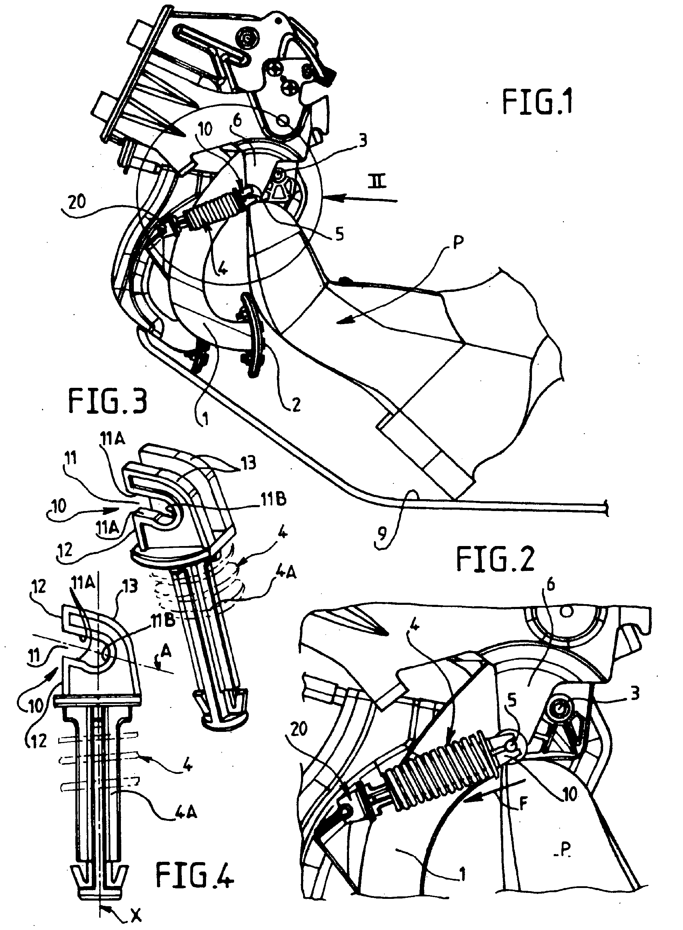

En référence au dessin des figures 1 et 2, on a représenté une pédale de débrayage 1 de véhicule automobile comportant une plaque d'appui 2, la référence 9 désignant le plancher de l'habitacle du véhicule sur lequel presse le talon de l'utilisateur du véhicule. La pédale 1 est articulée sur un axe de pivotement 3 monté sur la carrosserie (non représentée) du véhicule. La force exercée par le pied P de l'utilisateur du véhicule lors du débrayage est, de manière connue en soi, assistée par un mécanisme à ressort d'assistance 4 dont la force s'exerce entre la pédale 1 et la carrosserie. Une première extrémité du ressort d'assistance 4, attaque, par l'intermédiaire d'une coupelle, dite « coupelle inférieure » 20, la pédale 1, tandis que l'autre extrémité du ressort 4 attaque, par l'intermédiaire d'une autre coupelle, dite « coupelle supérieure » 10 un pion fixe 5 du pédalier 6 situé au voisinage de l'axe de pivotement 3 de la pédale 1. Les liaisons des coupelles 20 et 10, respectivement sur la pédale 1 et le pion fixe 5, sont de type liaison pivot.

De manière connue en soi également, le mécanisme à ressort d'assistance se compose d'une tige de guidage 4A et d'un ressort hélicoïdal 4 qui entoure la tige de guidage.

La liaison de la coupelle supérieure 10 sur le pion fixe 5 du pédalier 6 s'effectue par clippage. Comme déjà mentionné précédemment et schématiquement représenté sur la figure 1, le pied du conducteur peut venir toucher, involontairement, la coupelle supérieure 10, exercé un effort (flèche « F » de la figure 2) suffisant sur cette coupelle 10 pour provoquer la compression du ressort 4 et entraîner le déclippage du dispositif d'assistance. Cette situation se trouve d'autant plus fréquente que l'espace compris entre la pédale 1 et le plancher 9 de l'habitacle est relativement restreint.

De plus, on notera que dans certains véhicules l'assise est très basse et l'inclinaison de la plaque d'appui importante, ce qui place la pointe du pied dans la proximité immédiate du ressort d'assistance et, de ce fait, augmente encore le risque de déclippage involontaire évoqué ci-dessus.

La présente invention a pour but d'empêcher le déclippage du ressort d'assistance en s'opposant à l'effort « F » du pied de l'utilisateur sur la coupelle supérieure 10.

A cette fin, il est prévu une nouvelle coupelle supérieure représentée sur le dessin des figures 3 à 6. Les pièces et parties de pièces des figures 3 à 6, qui sont identiques ou similaires aux pièces et parties de pièces des figures 1 et 2, sont désignées par les mêmes références numériques.

De manière connue en soi, le ressort d'assistance 4 est un ressort de type hélicoïdal qui entoure une tige de guidage centrale 4A, laquelle est reliée, comme mentionné précédemment, à la coupelle inférieure 20 et à la coupelle supérieure 10.

La coupelle supérieure 10 selon l'invention comporte une gorge 11, dite aussi « gorge de clippage » dans la suite du texte, dont l'axe longitudinal A (figure 4) est fortement incliné par rapport à l'axe longitudinal X du dispositif d'assistance. Cette gorge 11 débouche sur la face 12 de la coupelle supérieure 10 opposée à l'espace dans lequel évolue le pied « P » de l'utilisateur du véhicule en position de débrayage, de telle sorte qu'un appui involontaire sur la coupelle supérieure 10 par le pied P de l'utilisateur presse le fond de la gorge de clippage 11 sur ledit pion fixe 5 et, par conséquent, supprime tout risque de déclippage du dispositif d'assistance.

L'axe longitudinal, désigné « A », de la gorge de clippage 11 est incliné d'un angle voisin de - et supérieur à - 90° par rapport à l'axe longitudinal X du dispositif.

La gorge de clippage 11 est composée d'un orifice central circulaire 11B prolongé par un tronçon sensiblement rectiligne 11A débouchant sur la face 12 de la coupelle supérieure 10 opposée à l'espace dans lequel évolue le pied P de l'utilisateur du véhicule en position de débrayage.

De manière différente, la face 13 de la coupelle supérieure 10 située du côté de l'espace dans lequel évolue le pied P de l'utilisateur du véhicule en position de débrayage est une surface courbe convexe sensiblement centrée sur le pion fixe 5, de manière à permettre un renforcement du clippage en cas d'appui involontaire du pied de l'utilisateur sur ladite coupelle supérieure 10.

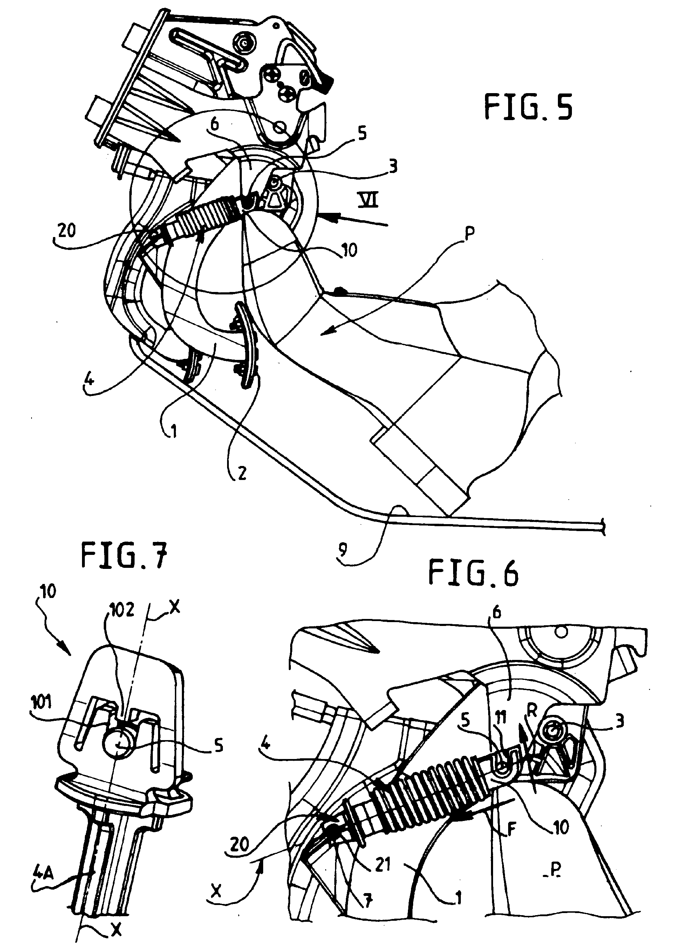

L'axe longitudinal A de la gorge de clippage 11 est sensiblement vertical lorsque la coupelle supérieure 10 est en position clippée, comme représenté sur les figures 5 et 6.

La structure de la coupelle 10 permet de sécuriser la liaison du dispositif d'assistance à ressort 4 sur le pédalier 6. Ainsi, en cas d'appui involontaire sur la coupelle supérieure 10 par le pied P de l'utilisateur, comme représenté sur la figure 6, cet appui presse le fond de la gorge de clippage 11 sur le pion fixe 5 (effort illustré par la flèche « R » de la figure 6) et, par conséquent, supprime tout risque de déclippage du dispositif d'assistance.

En référence au dessin de la figure 7, on a représenté une variante de réalisation de la coupelle supérieure 10. Dans cette variante, la gorge de clippage 101 de la coupelle supérieure 10 s'étend selon l'axe longitudinal X du dispositif. Il est prévu une languette 102 de la coupelle 10, qui vient bloquer le pion fixe 5 à l'intérieur de la gorge de clippage 101, de telle sorte qu'un appui involontaire sur la coupelle supérieure 10 par le pied P de l'utilisateur ne vient pas sortir le pion 5 de la gorge de clippage 101 et, par conséquent, tout risque de déclippage du dispositif d'assistance est supprimé.

Selon un mode de réalisation avantageux de l'invention, la coupelle inférieure 20, reliée à la pédale de débrayage 1, est de type connu en soi. Elle présente une gorge 21 pour le clippage du dispositif sur un pion 7 solidaire de la pédale 1. La gorge 21 s'étend selon la direction longitudinale du ressort d'assistance 4.

Le dispositif d'assistance décrit ci-dessus présente de nombreux avantages, parmi lesquels les avantages suivants :
- il est d'une grande fiabilité, parce qu'il supprime les risques de « déclippage » du ressort d'assistance que pouvaient connaître les dispositifs connus de l'art antérieur sous l'effet d'un appui involontaire du pied de l'utilisateur du véhicule,
- il est compatible avec l'ensemble des pédaliers des véhicules,
- il est de conception et de réalisation simple, et
- il est économique.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée des revendications.

## Revendications

1. Système d'actionnement d'un embrayage de véhicule, comprenant une pédale et un dispositif d'assistance de ladite pédale, le dispositif d'assistance comportant un ressort d'assistance (4) fixé, par une extrémité, à une coupelle supérieure (10) munie d'une gorge pour le clippage de ladite coupelle supérieure sur un pion (5) destiné à être solidarisé à une partie fixe du véhicule et fixé, par l'autre extrémité, à une coupelle inférieure (20) reliée à la pédale de débrayage (1), **caractérisé en ce que** ladite gorge de clippage (11) de la coupelle supérieure (10) est très inclinée par rapport à l'axe longitudinal (X) du ressort d'assistance (4) et débouche sur la face (12) de la coupelle supérieure (10) opposée à l'espace dans lequel évolue le pied (P) de l'utilisateur du véhicule en position de débrayage, de telle sorte qu'un appui involontaire sur la coupelle supérieure (10) par le pied (P) de l'utilisateur presse le fond de la gorge de clippage (11) sur ledit pion fixe (5) et, par conséquent, supprime tout risque de déclippage du dispositif d'assistance.

2. Système d'actionnement d'un embrayage selon la revendication 1, **caractérisé en ce que** ladite gorge de clippage (11) de la coupelle supérieure est d'axe longitudinal (A) incliné d'un angle voisin de 90° par rapport à l'axe longitudinal (X) du dispositif.

3. Système d'actionnement d'un embrayage selon l'une quelconque des revendications 1 et 2, **caractérisé en ce que** ladite gorge de clippage est composée d'un orifice central circulaire (11B) prolongé par un tronçon sensiblement rectiligne (11A) débouchant sur la face (12) de la coupelle supérieure (10) opposée à l'espace dans lequel évolue le pied (P) de l'utilisateur du véhicule en position de débrayage.

4. Système d'actionnement d'un embrayage selon la revendication 1, **caractérisé en ce que** la face (13) de la coupelle supérieure (10) située du côté de l'espace dans lequel évolue le pied (P) de l'utilisateur du véhicule en position de débrayage est une surface courbe convexe, de manière à permettre un renforcement du clippage en cas d'appui involontaire du pied de l'utilisateur sur ladite coupelle supérieure (10).

5. Système d'actionnement d'un embrayage selon l'une quelconque des revendications 1 et 2, **caractérisé en ce que** l'axe longitudinal (A) de la gorge de clippage (11) est sensiblement vertical lorsque la coupelle supérieure (10) est en position clippée.

6. Système d'actionnement d'un embrayage selon l'une quelconque des revendications 1 à 5, **caractérisé en ce que** ladite coupelle inférieure (20), reliée à la pédale de débrayage (1), présente une gorge (21) pour le clippage du dispositif sur un pion (7) solidaire de la pédale (1), et **en ce que** cette gorge (21) s'étend selon la direction longitudinale du ressort d'assistance (4).

7. Système d'actionnement d'un embrayage selon l'une quelconque des revendications 1 à 6, **caractérisé en ce que** ledit ressort d'assistance (4) est un ressort hélicoïdal qui entoure une tige de guidage centrale (4A).

8. Véhicule, en particulier véhicule automobile, **caractérisé en ce qu'**il comporte un système d'actionnement de l'embrayage conforme à l'une quelconque des revendications précédentes.

## Claims

1. A system for actuating a vehicle clutch, including a pedal and a device for assisting the said pedal, the assisting device comprising an assisting spring (4), fixed, by one end, to an upper shell (10) provided with a groove for clipping the said upper shell on a pin (5) intended to be secured to a fixed part of the vehicle and fixed, by the other end, to a lower shell (20) connected to the clutch pedal (1), **characterized in that** the said clipping groove (11) of the upper shell (10) is greatly inclined with respect to the longitudinal axis (X) of the assisting spring (4) and opens out on the face (12) of the upper shell (10) opposite the space in which the foot (P) of the user of the vehicle moves to in the declutching position, such that an involuntary application on the upper shell (10) by the foot (P) of the user presses the base of the clipping groove (11) on the said fixed pin (5) and, consequently, eliminates any risk of unclipping of the assisting device.

2. The system for actuating a clutch according to Claim 1, **characterized in that** the said clipping groove (11) of the upper shell has a longitudinal axis (A) inclined by an angle close to 90° with respect to the longitudinal axis (X) of the device.

3. The system for actuating a clutch according to any one of Claims 1 and 2, **characterized in that** the said clipping groove is composed of a central circular orifice (11B) extended by a substantially rectilinear section (11A) opening out on the face (12) of the upper shell (10) opposite the space in which the foot (P) of the user of the vehicle moves to in the declutching position.

4. The system for actuating a clutch according to Claim 1, **characterized in that** the face (13) of the upper shell (10) situated on the side of the space in which the foot (P) of the user of the vehicle moves to in the declutching position is a convex curved surface, so as to permit a reinforcement of the clipping in the case of involuntary application of the foot of the user on the said upper shell (10).

5. The system for actuating a clutch according to any one of Claims 1 and 2, **characterized in that** the longitudinal axis (A) of the clipping groove (11) is substantially vertical when the upper shell (10) is in clipped position.

6. The system for actuating a clutch according to any one of Claims 1 to 5, **characterized in that** the said lower shell (20), connected to the clutch pedal (1), has a groove (21) for the clipping of the device on a pin (7) secured to the pedal (1), and **in that** this groove (21) extends along the longitudinal direction of the assisting spring (4).

7. The system for actuating a clutch according to any one of Claims 1 to 6, **characterized in that** the said assisting spring (4) is a helicoidal spring which surrounds a central guiding rod (4A).

8. A vehicle, in particular a motor vehicle, **characterized in that** it comprises a system for actuating the clutch according to any one of the preceding claims.

## Patentansprüche

1. Betätigungssystem einer Fahrzeugkupplung, das ein Pedal und eine Hilfsvorrichtung des Pedals aufweist, wobei die Hilfsvorrichtung eine Hilfsfeder (4) aufweist, die an einem Ende an einer oberen Schale (10) befestigt ist, die mit einer Hohlkehle zum Einrasten der oberen Schale auf einem Stift (5) versehen ist, der dazu bestimmt ist, fest mit einem stationären Teil des Fahrzeugs verbunden zu werden und an dem anderen Ende an einer unteren Schale (20) befestigt zu werden, die mit dem Auskuppelpedal (1) verbunden ist, **dadurch gekennzeichnet, dass** die Einrasthohlkehle (11) der oberen Schale (10) in Bezug zu der Längsachse (X) der Hilfsfeder (4) sehr stark geneigt ist und auf der Seite (12) der oberen Schale (10), die den Raum entgegengesetzt ist, in dem sich der Fuß (P) des Benutzers des Fahrzeugs in Auskuppelposition bewegt, derart mündet, dass ein unbeabsichtigtes Drücken auf die obere Schale (10) durch den Fuß (P) des Benutzers den Grund der Einrasthohlkehle (11) auf den stationären Stift (5) drückt und infolgedessen jede Gefahr des Ausrastens der Hilfsvorrichtung eliminiert.

2. Betätigungssystem einer Kupplung nach Anspruch 1, **dadurch gekennzeichnet, dass** die Einrasthohlkehle (11) der oberen Schale in der Längsachse (A) liegt, die um einen Winkel nahe 90° in Bezug zu der Längsachse (X) der Vorrichtung geneigt ist.

3. Betätigungssystem einer Kupplung nach einem der Ansprüche 1 und 2, **dadurch gekennzeichnet, dass** die Einrasthohlkehle aus einer zentralen kreisförmigen Öffnung (11B) besteht, die von einem im Wesentlichen geradlinigen Abschnitt (11A) verlängert wird, der auf der Seite (12) der oberen Schale (10), die den Raum, in dem sich der Fuß (P) des Benutzers des Fahrzeugs in Auskuppelposition bewegt, entgegengesetzt ist, mündet.

4. Betätigungssystem einer Kupplung nach Anspruch 1, **dadurch gekennzeichnet, dass** die Seite (13) der oberen Schale (10), die sich auf der Seite des Raums befindet, in dem sich der Fuß (P) des Benutzers des Fahrzeugs in Auskuppelposition bewegt, befindet, eine konvexe gebogene Oberfläche ist, so dass eine Verstärkung des Einrastens bei einem unbeabsichtigten Druck des Fußes des Benutzers auf die obere Schale (10) erlaubt wird.

5. Betätigungssystem einer Kupplung nach einem der Ansprüche 1 und 2, **dadurch gekennzeichnet, dass** die Längsachse (A) der Einrasthohlkehle (11) im Wesentlichen vertikal ist, wenn die obere Schale (10) in eingerasteter Position ist.

6. Betätigungssystem einer Kupplung nach einem der Ansprüche 1 bis 5, **dadurch gekennzeichnet, dass** die untere Schale (20), die mit dem Auskuppelpedal (1) verbunden ist, eine Hohlkehle (21) für das Einrasten der Vorrichtung auf einem Stift (7) aufweist, der fest mit dem Pedal (1) verbunden ist, und dass sich diese Hohlkehle (21) entlang der Längsrichtung der Hilfsfeder (4) erstreckt.

7. Betätigungssystem einer Kupplung nach einem der Ansprüche 1 bis 6, **dadurch gekennzeichnet, dass** die Hilfsfeder (4) eine Schraubenfeder ist, die einen zentralen Führungsstift (4A) umgibt.

8. Fahrzeug, insbesondere Kraftfahrzeug, **dadurch gekennzeichnet, dass** es ein Betätigungssystem der Kupplung gemäß einem der vorhergehenden Ansprüche aufweist.
